# EUROPEAN PATENT APPLICATION

(11) **EP 4 202 213 A1**
(43) Date of publication of application: **28.06.2023**
(21) Application number: 21306868.7
(22) Date of filing: 21.12.2021
(51) Int. Cl.: F03D 13/25, B63B 35/44

(54) **FLOATING WIND PLATFORM AND ASSOCIATED FLOATING WIND ASSEMBLY**

(71) Applicant: TotalEnergies OneTech, 92400 Courbevoie (FR)
(72) Inventor: Le-Guennec, Stéphane, 78380 BOUGIVAL (FR); RABOIN, Jean-Christophe, 41600 CHAUMONT SUR THARONNE (FR)
(74) Representative: Lavoix

(57) **Abstract**

The invention concerns a floating wind platform able to be placed on a body of water and comprising:
- a floater structure (28) able to float on the body of water;
- a tower (30) protruding from the floater structure (28) and extending along a main direction (Z), the tower (30) being able to support a wind turbine nacelle; the tower (30) comprising a composite material.

## Description

The present invention concerns a floating wind platform.

The invention also concerns an assembly comprising such a floating wind platform.

A floating wind platform conventionally comprises a turbine, positioned at the end of a tower, which is itself connected at the other end, to a floater structure able to float on a sea for example. The tower is usually made of steel to provide enough resistance.

The turbine comprises a propeller able to be rotated by the wind in order to operate an electrical generator. The rotation of the propeller generates cyclic excitations due notably to the passage of the blades of the propeller in front of the tower. When the frequency of these excitations becomes too close to the structural natural frequencies of the assembly, these excitations may trigger and maintain a resonance and thus an accelerated degradation of this assembly.

While designing the floating wind platform, it is therefore essential to adjust the design of the floater structure and the tower structure to reduce the resonance effect of the tower while maintaining sufficient strength capacity to withstand the extreme bending moment in the tower induced by the hull acceleration and turbine thrust force.

The towers are usually designed to have the first natural mode between the so-called 1P frequency (corresponding to one rotor rotation) and the so-called 3P frequency (corresponding to each blade passing the tower). In the design process, at least 10% are usually required between the tower first natural period and the 3P Frequency to mitigate the resonance effect.

However, compared to land-based wind turbines, the natural period of the tower increases when the wind turbine is placed on water and moves towards the 3P excitation frequency, leading to resonance effect and therefore large fatigue damage in the tower.

Moreover, as the turbine becomes larger in the industry, for example providing an electrical power greater than 14MW, the rotation speed is reduced to limit the wind relative velocity at the extremity of the blades to mitigate erosion and avoid supersonic flow. Such lower rotation speed reduces the 3P frequency which makes the assembly design and compliance to the above 10% criterion even more challenging and limits the potential optimization of the assembly design.

In order to reduce the natural frequency of the tower, it has been considered to reduce the tower stiffness. However, reducing the tower stiffness by adjusting the tower diameter and wall thickness has some limitation due to the strength capacity requirement in extreme conditions.

FR 3098555 suggests using an elastomer pad damping system between the tower and the hull. However, such a system is very complex and expensive to implement. In particular, the suggested interface will make use of massive steel casting that are known to be expensive. Up to the present day, such a system has never been implemented on a real offshore wind turbine site due to these limitations.

One of the aims of the present invention is therefore to provide a floating wind platform assuring a sufficient separation between the tower first natural period and respectively the 1P frequency and the 3P frequency, while providing adequate resistance and integrity during the whole service life of the turbine and being cost efficient.

For this purpose, the invention relates to a floating wind platform able to be placed on a body of water and comprising: a floater structure able to float on the body of water; and a tower protruding from the floater structure and extending along a main direction, the tower being able to support a wind turbine nacelle; the tower comprising a composite material.

Indeed, using these features, the tower comprising composite material instead of only steel enables to reduce the natural period of the tower to acceptable value. Indeed, the composite material may presents six times less stiffness than steel for an equivalent strength capacity. In particular, the location and the quantity of composite material in the tower may be adjusted to reduce the natural period of the tower depending on the overall design of the platform and on the external conditions which may influence the natural period. Moreover, this tower in composite material is simple to manufacture and the interface with the floater structure is simplified. The invention provides therefore a cost effective solution to the resonance issue.

The platform according to the invention comprises one or more of the following features, taken solely, or according to any technical feasible combination:
- the tower comprises an inner layer made of steel and an outer layer made of the composite material;
- the tower comprises: a lower part connected to the floater structure; an upper part able to support the wind turbine nacelle; and an intermediate part arranged between the lower part and the upper part along the main direction; the intermediate part being formed of the composite material;
- the lower part and the upper part are made of steel;
- the composite material is a fiber reinforced polyester resin or epoxy resin, in particular glass fiber, carbon nanotube or carbon fiber; optionally in the form of woven or non-woven fabric or bulk fiber;
- the composite material may be coated with paint to prevent degradation from the environment such as ultraviolet radiation and/or saline water;
- the floater structure comprises a floater and a transition part protruding from the floater, the tower being fixed to the transition part;
- the tower is fixed to the transition part through a bolted flange;
- the tower is grouted to the transition part;
- the transition part extends along the main direction on a length comprised between 40 cm and 20 m.

The invention further concerns an assembly comprising a floating wind platform as defined above and a wind turbine nacelle comprising an electrical generator coupled to a propeller, the wind turbine nacelle being fixed to the upper part of the tower.

According to some embodiments, the electrical generator is able to produce an electric current presenting a power greater than 10 MW, and notably greater than 14 MW.

The invention will be better understood, upon reading of the following description, given solely as an example, and made in reference to the appended drawings, in which:
- Figure 1 is a schematic view of a floating wind assembly comprising a floating wind platform according to the invention, the floating wind platform comprising a floater structure and a tower ;
- Figure 2 is a partial cross section view of the floating wind platform of Figure 1, according to an embodiment;
- Figure 3 is a partial cross section view of the floating wind platform of Figure 1, according to another embodiment;
- Figure 4 is an horizontal cross section view of the tower of Figure 1, according to a first embodiment; and
- Figure 5 is a perspective view of the tower of Figure 1, according to a second embodiment.

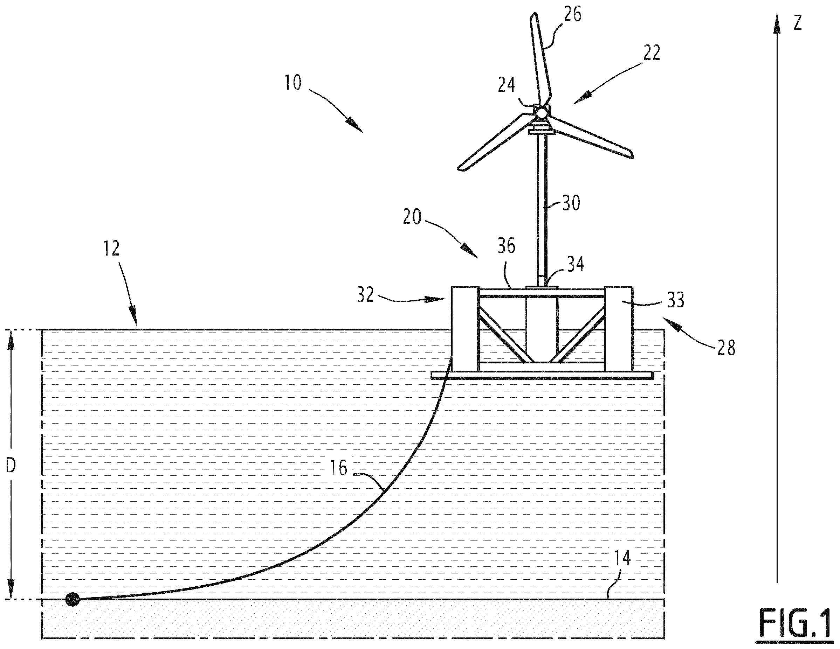

A floating wind assembly 10 is shown on figure 1.

The floating wind assembly 10 is able to be placed on a body of water 12.

In particular, the body of water 12 is for example a sea. The body of water 12 lies on a sea ground 14. The skilled person will understand that when the body of water 12 is a lake, the sea ground 14 is then the ground of the lake.

As visible in figure 1, the body water 12 presents a water depth D, according to a vertical direction, comprised between 50 m and 1500 m.

In particular, the floating wind assembly 10 is able to be moored to the sea ground 14. To this end, the floating wind assembly 10 is able to be attached to the sea ground 14 through at least one mooring line 16, advantageously three mooring lines 16.

The floating wind assembly 10 comprises a floating wind platform 20 and a wind turbine nacelle 22.

The wind turbine nacelle 22 comprises an electrical generator 24 coupled to a propeller 26.

When the floating wind assembly 10 is moored to the sea ground 14 on the operating site, the propeller 26 is configured to rotate in order to operate the generator 24 which produces then electricity.

The electrical generator 24 is able to produce an electric current presenting a power greater than 10 MW, and notably greater than 14 MW.

As represented on Figure 1, the floating wind platform 20 comprises a floater structure 28 and a tower 30 protruding from the floater structure 28.

The tower 30 extends along a main direction Z. The main direction Z is approximately vertical when the buoyancy element 32 is placed on the body of water 12.

The floater structure 28 is able to float on the body of water 12.

The floater structure 28 comprises a buoyancy element 32.

The buoyancy element 32 comprises here three stabilizing columns 33 interconnected through beams. However, the buoyancy element 32 may comprise two stabilizing columns 33, or more than three stabilizing columns 33. The buoyancy element 32 may also be any type of floating system enabling to float on the body of water 12 and support the tower 30.

The floater structure 28 further comprises advantageously a transition part 34.

The transition part 34 is protruding from the buoyancy element 32.

In particular, the buoyancy element 32 presents an upper surface 36 when the buoyancy element 32 is placed on the body of water 12. The transition part 34 is then protruding upwards from the upper surface 36, along the main direction Z.

The transition part 34 presents a cylindrical shape or a tronconical shape.

The transition part 34 is advantageously made of steel.

The transition part 34 extends along the main direction Z on a length H2 advantageously comprised between 40 cm and 20 m.

The tower 30 protrudes from the floater structure 28, along the main direction Z.

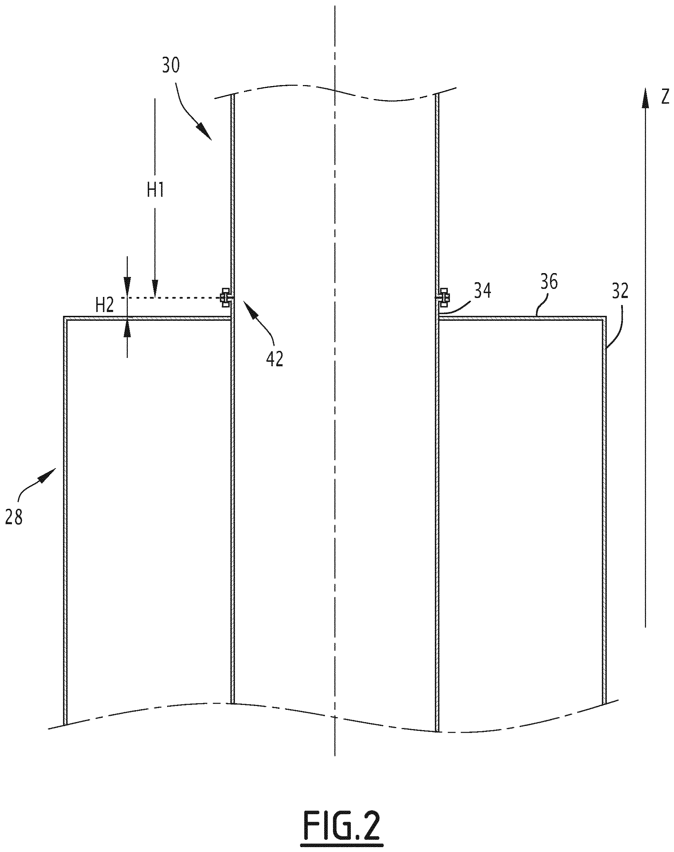

As represented on Figure 2, the tower 30 is protruding from the transition part 34 of the floater structure 28, along the main direction Z.

In a variant, not shown, the floater structure 28 is devoid of a transition part and the tower 30 is protruding directly from the buoyancy element 32.

The tower 30 extends along the main direction Z on a total length H1 comprised between 80 m and 150 m. For example, when the electrical generator 24 presents a power of 10 MW, the total length H1 is typically equal to 95 m. When the electrical generator 24 presents a power of 15 MW, the total length H1 is typically equal to 125 m. When the electrical generator 24 presents a power of 20 MW, the total length H1 is typically equal to 135 m.

The tower 30 presents a cylindrical shape or a tronconical shape.

As shown on Figure 2, the tower 30 is advantageously fixed to the transition part 34 through a bolted flange 42.

The tower 30 and the transition part 34 form two axially consecutive component pieces. Each piece presents a circular disc-shaped flange. Bolt holes are arranged in each circular disc-shaped flange and are preferably regularly spaced around the flange. The two circular disc-shaped flanges face each other and bolts passing through the holes fix the two pieces 30, 34 together, wherein bolts are connected with nuts.

The bolts and nuts are made of optionally stainless steel or advantageously of a composite material. Advantageously, the bolts and nuts are made of the same material as the tower 30.

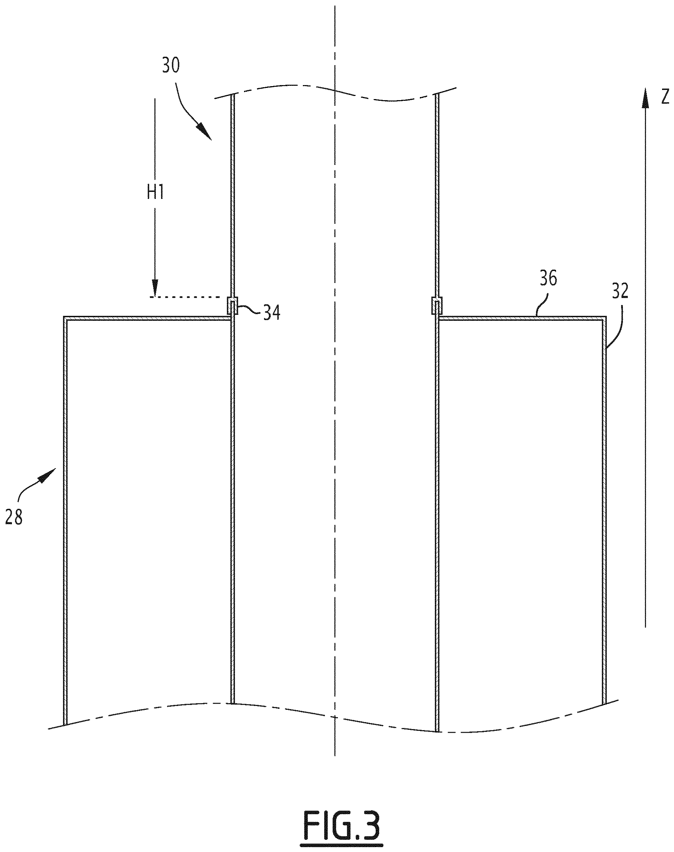

In a variant, as shown on Figure 3, the tower 30 is grouted to the transition part 34. In particular, the tower 30 presents a clamp shape end and is assembled with the transition part 34 by deformation of the clamp shape end on the transition part 34.

The tower 30 extends in the continuation of the transition part 34 along the main direction Z.

That is to say, there is a smooth connection between the tower 30 and the transition part 34 along the main direction Z, without a discontinuity.

The tower 30 comprises a composite material.

Advantageously, the tower 30 is made fully of composite material.

A composite material is an assembly of at least two immiscible components, but with a high penetration capacity. The properties of the different components complement each other and so the new heterogeneous material thus formed presents properties that the components alone do not possess.

A structural composite material is generally composed of a reinforcement and a matrix. The reinforcement, advantageously in fibrous or filamentary form, provides the essential mechanical properties.

The matrix acts as a binder to protect the reinforcement from the environment, to maintain it in its initial position and to ensure the transmission of forces. Composite materials can be classified according to the nature of their matrix: organic matrix composite material, ceramic matrix composite material or metal matrix composite material.

In the present invention, the composite material is preferably comprising an organic matrix which is coating an inorganic reinforcement. The organic matrix is a polymeric material such as a polyolefin, a polyamide, a polyester or an epoxy resin. The organic matrix is preferably chosen among epoxy and polyester resins. The reinforcement material is an inorganic material in the form of fibers. Suitable reinforcement material comprises short or long glass fibers, carbon nanotubes and/or carbon fibers.

Advantageously, the composite material is made of polyester and glass.

In a variant, the composite material is advantageously made of epoxy and glass.

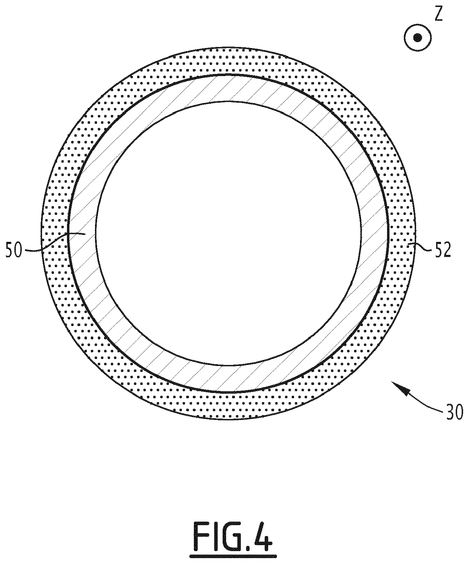

In a first embodiment of the tower 30 represented on Figure 4, the tower 30 comprises an inner layer 50 and an outer layer 52.

The inner layer 50 is facing the inside of the tower 30 and the outer layer 52 is facing the outside of the tower 30.

The inner layer 50 and the outer layer 52 are extending along the main direction Z on the whole length of the tower H1.

The inner layer 50 is made of steel.

The outer layer 52 is made of the composite material.

The outer layer 52 is advantageously made of a single material.

The single material is advantageously a fiber reinforced polyester, in particular glass or carbon fiber.

The width of the inner layer 50 and the width of the outer layer 52 may be adjusted to reduce the natural period of the tower 30 to a target value, between the 1P and the 3P frequencies.

The larger the outer layer 52 is relatively to the inner layer 50, the lower the natural period of the tower 30 will be.

Advantageously, the width of the outer layer 52 is not constant along of the height of the tower. The differences of width of the outer layer 52 enable to further improve the tuning of the natural period of the tower 30.

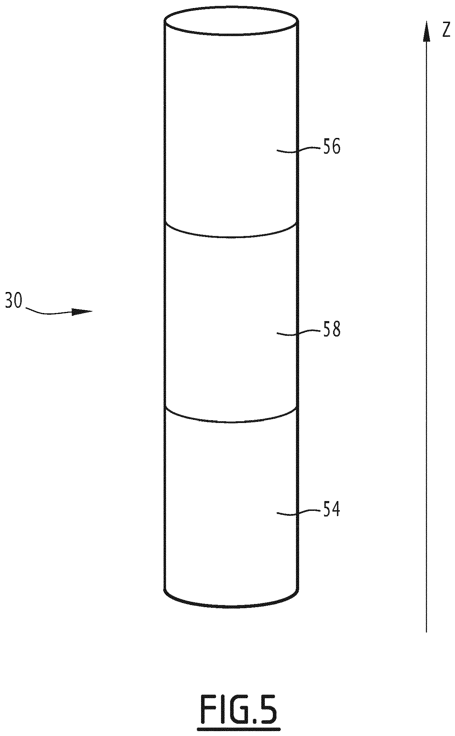

In a second embodiment of the tower 30 represented on Figure 5, the tower 30 comprises a lower part 54 connected to the floater structure 28, an upper part 56 able to support the wind turbine nacelle 22 and an intermediate part 58 arranged between the lower part 54 and the upper part 56 along the main direction Z.

The intermediate part 58 is formed of the composite material.

Advantageously, the lower part 54 and the upper part 56 are made of steel.

The height of the intermediate part 58 is adjusted to reduce the natural period of the tower 30 to a target value, between the 1P and the 3P frequencies.

The longer the intermediate part 58 is, the lower the natural period of the tower 30 will be.

Moreover, the intermediate part 58 is preferably arranged in the lower part of the tower 30. In other words, the lower part 54 is less high than the upper part 56.

The intermediate part 58 is advantageously made of a single material.

Therefore, the intermediate part 58 is devoid of other materials or mechanical pieces in addition to the composite material. The intermediate part 58 only comprises the composite material arranged between the upper part 56 and the lower part 54.

The single material is advantageously a fiber reinforced polyester resin or epoxy resin, in particular glass carbon nanotube or carbon fiber. The fiber reinforcement is optionally in the form of a woven or non-woven fabric or bulk fiber.

The single material is optionally coated with paint to prevent degradation from the environment, especially ultraviolet radiation and/or saline water.

In a third embodiment, the first and the second embodiments are combined.

The tower 30 then comprises an intermediate part 58 comprising an inner layer (made of steel and an outer layer made of the composite material.

The natural period is then adjusted by adapting both on one hand the width of the inner layer and the width of the outer layer and on the other hand the height of the intermediate part 58.

Conventionally, the tower 30 is only made of steel. However, as explained above, conventional steel towers lead to a tower 30 first natural period too close of the 3P frequency.

The composite material may be six times less stiff than steel for an equivalent strength capacity.

The invention enables to arrange a less stiff part in the tower 30 and by adjusting the amount of composite material in the tower 30, it is possible to reach the target in term of natural frequency and mitigate the resonance effect and thus fatigue damage.

The composite material enables also to provide additional structural damping to the assembly 10.

Moreover, the composite material avoids corrosion issues of the tower 30.

However, a coating may be arranged on top of the tower 30, notably to protect the composite material from the ultraviolet radiations and/or salted water from e.g., an ocean or a salted lake.

It appears clear that the invention has a number of advantages.

In particular, as explained above, the invention enables to provide a floating wind platform presenting a first natural period sufficiently away from the 1P frequency and from the 3P frequency.

In particular, the tower 30 comprising composite material enables to reduce the natural period of the tower to an acceptable value.

The composite material being less stiff than steel, the amount of composite material may be adjusted to reduce the natural period of the tower 30 depending on the overall design of the platform 10 and on the external conditions which may influence the natural period of the tower 30.

Moreover, the invention ensures and adequate resistance and integrity during the whole service life of the floating wind assembly 10.

Finally, this tower 30 in composite material is simple to manufacture and the interface with the floater structure 28 is simplified.

The invention provides therefore a cost-effective solution to the resonance issue.

## Claims

1. Floating wind platform (20) able to be placed on a body of water (12) and comprising:
- a floater structure (28) able to float on the body of water (12) ; and
- a tower (30) protruding from the floater structure (28) and extending along a main direction (Z), the tower (30) being able to support a wind turbine nacelle (22); the tower (30) comprising a composite material.

2. Floating wind platform (20) according to claim 1, wherein the tower (30) comprises an inner layer (50) made of steel and an outer layer (52) made of the composite material.

3. Floating wind platform (20) according to claim 1 or 2, wherein the tower (30) comprises:
- a lower part (54) connected to the floater structure (28);
- an upper part (56) able to support the wind turbine nacelle (22); and
- an intermediate part (58) arranged between the lower part (54) and the upper part (56) along the main direction (Z); the intermediate part (58) being formed of the composite material.

4. Floating wind platform (20) according to claim 3, wherein the lower part (54) and the upper part (56) are made of steel.

5. Floating wind platform (20) according to any one of the preceding claims, wherein the composite material is a fiber reinforced polyester resin or epoxy resin, in particular glass, carbon nanotube or carbon fiber, wherein the fiber reinforcement is optionally in the form of woven or non-woven fabric or in the form of bulk fiber.

6. Floating wind platform (20) according to any one of the preceding claims, wherein the floater structure (28) comprises a buoyancy element (32) and a transition part (34) protruding from the buoyancy element (32), the tower (30) being fixed to the transition part (34).

7. Floating wind platform (20) according to claim 6, wherein the tower (30) is fixed to the transition part (34) through a bolted flange (42).

8. Floating wind platform (20) according to claim 6, wherein the tower (30) is grouted to the transition part (34).

9. Floating wind platform (20) according to any of claims 6 to 8, wherein the transition part (34) extends along the main direction (Z) on a length (H2) comprised between 40 cm and 20 m.

10. Floating wind assembly (10) comprising :
- a floating wind platform (20) according to any one of the preceding claims;
- a wind turbine nacelle (22) comprising an electrical generator (24) coupled to a propeller (26), the wind turbine nacelle (22) being fixed to the tower (30).

11. Floating wind assembly (10) according to claim 10, wherein the electrical generator (24) is able to produce an electric current presenting a power greater than 10 MW, and notably greater than 14 MW.
